# EUROPEAN PATENT SPECIFICATION

(11) **EP 3 892 088 B1**
(45) Date of publication and mention of the grant of the patent: **10.05.2023**
(21) Application number: 19922996.4
(22) Date of filing: 23.04.2019
(51) Int. Cl.: A01G 7/04

(54) **ILLUMINATION METHOD FOR FACILITATING PLANT GROWTH**
BELEUCHTUNGSVERFAHREN ZUR ERLEICHTERUNG DES PFLANZENWACHSTUMS
PROCÉDÉ D'ÉCLAIRAGE POUR FACILITER LA CROISSANCE DE PLANTES

(30) Priority: 04.04.2019 CN 201910270563
(43) Date of publication of application: 13.10.2021
(73) Proprietor: Fujian Sanan Sino-Science Photobiotech Co., Ltd., Quanzhou, Fujian 362411 (CN)
(72) Inventor: LI, Yang, Quanzhou, Fujian 362411 (CN); LI, Shaohua, Quanzhou, Fujian 362411 (CN); ZHAN, Zhuo, Quanzhou, Fujian 362411 (CN); CHEN, Yiqun, Quanzhou, Fujian 362411 (CN); WANG, Tingting, Quanzhou, Fujian 362411 (CN); MA, Jian, Quanzhou, Fujian 362411 (CN)
(74) Representative: Petculescu, Ana-Maria
(86) International application number: PCT/CN2019/083859
(87) International publication number: WO 2020/199277

(56) References cited:
- EP-A1- 2 500 951
- EP-A1- 2 923 561
- WO-A1-2011/070796
- WO-A1-2013/038854
- US-A1- 2014 215 913
- US-A1- 2018 007 838

## Description

### TECHNICAL FIELD

The present invention relates to a method for promoting plant growth.

### BACKGROUND

Light is a basic environmental factor in growth and development of plants. Light is not only a basic energy source for photosynthesis, but also an important regulatory factor in growth and development of plants. Growth and development of plants are not only restricted by light amount or light intensity, but also affected by light quality, namely, radiation of light at different wavelengths and different composition ratios of light.

Photosynthesis provides necessary food, energy and oxygen for survival and reproduction of almost all living things in the biosphere on earth. Sunlight is a basic energy source for photosynthesis of plants. Insufficient sunlight will inevitably limit photosynthesis, and excessive sunlight will cause photoinhibition of photosynthesis and even photodestruction of photosynthetic mechanisms. Plants always live in an environment with fluctuating light, and often encounters insufficient light (especially middle and lower leaves of a canopy in the morning and evening on a cloudy day) and excessive light (upper leaves at noon on a sunny day). Therefore, light-harvesting regulation is necessary for photosynthesis in order to maximize the use of light energy under weak light, and to avoid damage caused by excessive light to photosynthetic mechanisms in strong light. Plants have developed a series of light-harvesting regulation strategies during evolution for a long time. The light-harvesting regulation strategies include fast regulation and slow regulation: fast regulation can occur within a few minutes, such as leaf movement, chloroplast movement, state transition and reversible detachment of a light-harvesting complex (LHCII) from a photosystem II (PSII) core complex (namely reaction center complex); and slow regulation is completed within a few hours or days, such as changes in protein abundance or size of the light-harvesting complex and changes in molecular compositions of leaves. These regulations are performed at different levels in organs (leaf movement), sub-cells (chloroplast movement), thylakoid membranes (state transition) and molecules (changes in contents of chlorophyll (Chl), anthocyanin and stress proteins. Of course, changes in size of the light-harvesting complex include short-term response and long-term adaptation (through gene expression and developmental changes) to changes in light intensity. Scientific researches show that chlorophyll a and phytochrome in a red isomeric form (Pr) have strong absorption peaks at about 660 nm, and chlorophyll b has strong absorption at 640 nm. Therefore, in a traditional plant lighting lamp, the peak wavelength of a red light region is set to be 630-660 nm.

Due to an artificial light-type plant factory, the development of agriculture is no longer dependent on weather, and the regulation of plant growth is achieved by regulating an environment system, a light environment system, a nutrition system and a cultivation method in the factory. Among them, the regulation of a light environment is an important technology related to plant yield and quality and factory operating efficiency. Therefore, according to existing technologies, the regulation of plant yield and quality are mainly achieved by controlling light intensity, light period, a ratio of a red light to a blue light (R/B) and a ratio of a red light to a far-red light (F/FR) in light quality and a cultivation method. There are few reports about technologies for improving the quality and yield by adjusting an energy ratio of a specific wavelength.

For a long time, an energy transfer mechanism of a photosynthetic light-harvesting system is described by a resonance energy transfer provided by Förster (1948), referred to as Förster resonance energy transfer or fluorescence resonance energy transfer (Scholes 2003; 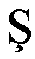 ener et al. 2011). That is, a donor molecule absorbs photon energy, transits into an excited state and then returns to a ground state in a non-radiative transition form to transfer the energy to an adjacent acceptor molecule with low transition energy, so that the acceptor molecule transits into an excited state, and then the energy is successively transferred and finally transferred to a reaction center. Therefore, by providing energy photons which are easy to absorb or energy photons which can achieve a synergistic effect, the energy transfer efficiency can be improved, thereby improving the quality and yield.

US2014/0215913 A1 discloses a method of cultivating a plant comprising a step (A) of irradiating a plant with a red light and a step (B) of irradiating a plant with a blue light, wherein the red light irradiation step (A) and the blue light irradiation step (B) are independently and separately carried out. It teaches that simultaneously irradiating a plant with a blue light and a red light with the traditional wavelengths of the blue light at 450 nm and of the red light at 660 nm does not provide improved results.

In the prior art, there are no reports on improvement of the plant yield and quality by adjusting the peak wavelength.

### SUMMARY

In view of the shortcomings in the prior art, an objective of the present invention is to provide a method for promoting plant growth to solve the problem that the efficiency of methods for promoting plant growth in the prior art is not high.

In a first aspect of the present invention, provided is a method for promoting plant growth according to claim 1.

Generally, the plant is cultivated indoors. A greenhouse planting mode may be adopted. The growing plant is a plant which begins to grow after seeding and germination.

Preferably, the light period of the red light is 2-24 h/d, and the light intensity is 10-1000 µmol/²m·s.

The peak wavelength of the red light may be 680-690 nm or 690-695 nm.

The light period of the red light may be 2-9 h/d, 9-12 h/d, 12-14 h/d or 14-24 h/d.

The light intensity of the red light may be 10-60 µmol/m²·s, 60-200 µmοl/m²·s, 200-250 µmol/m²·s or 250-1000 µmol/m²·s.

More preferably, the light period of the red light and the blue light is 2-24 h/d, and the total light intensity of the red light and the blue light is 10-1000 µmol/m²·s. The peak wavelength of the blue light may be 410-430 nm, 430-435 nm, 435-440 nm or 440-480 nm.

The light period of the blue light may be 2-9 h/d, 9-12 h/d, 12-14 h/d or 14-24 h/d.

The total light intensity of the red light and the blue light may be 10-60 µmol/m²·s, 60-200 µmοl/m²·s, 200-250 µmol/m²·s or 250-1000 µmol/m²·s.

The photon number ratio of the red light to the blue light may be (15-4): 1, (4-3): 1 or (3-0.1):1.

Further, more preferably, the light period of the red light, the blue light and the far-red light is 2-24 h/d, and the total light intensity of the red light, the blue light and the far-red light is 10-1000 µmol/m²·s.

The peak wavelength of the far-red light may be 730-735 nm or 735-740 nm.

The light period of the far-red light may be 2-9 h/d, 9-12 h/d, 12-14 h/d or 14-24 h/d.

The total light intensity of the red light, the blue light and the far-red light may be 10-60 µmol/m²·s, 60-200 µmol/m²·s, 200-250 µmol/m²·s or 250-1000 µmol/m²·s.

Preferably, a cultivation method of the plant includes use of soil, a nutrient solution or a substrate.

When the nutrient solution is used for cultivation, seedlings can be planted on hydroponic modules respectively, 2/3 of roots are soaked in the nutrient solution, and different nutrient solutions are used for different plants. For example, a Hoagland nutrient solution is used for var. ramosa Hort. The EC of the nutrient solution is 1.6-1.8, the pH is 5.5-7.5, the temperature of the nutrient solution is 18°C to 22°C, and the dissolved oxygen amount is 5-6 mg/L.

Preferably, the method specifically includes seeding and growth management. An existing technology is adopted for seeding. Growth management refers to necessary management for plants after germination, such as fertilization, watering and setting of a light source and environment conditions.

Preferably, the plant may be a vegetable or a Chinese medicinal material.

Preferably, the plant is at least one selected from var. ramosa Hort., brassica campestris L., brassica chinensis L., var. ramosa Hort., viola tricolor L. and seedlings of anectochilus roxburhii.

Var. ramosa Hort., commonly known as lactuca sative, is also known as ezicai, maizicai and wozicai and belongs to lactuca of the composite family.

Red Rosa Lettuce belongs to lactuca of the composite family.

Brassica campestris L. ssp. chinensis Makino (var. communis Tsen et Lee) belongs to brassica of cruciferae.

Brassica chinensis L. belongs to brassica of cruciferae.

Anectochilus roxburhii (Wall.) Lindl. is a plant belonging to anoectochilus of orchidaceae, and the whole grass is used as a medicine.

Viola tricolor L. is a biennial or perennial herbal plant belonging to viola of violaceae.

Preferably, the method further includes setting growth environment conditions: the environment temperature is 21°C to 24°C during daytime and 18°C to 20°C at night, and the humidity is 60% to 80%.

Preferably, the method further includes seeding and germination acceleration. For example, a method for seeding and germination acceleration of var. ramosa Hort. is as follows: full seeds of var. ramosa Hort. are selected, soaked in warm water at 50°C to 55°C for 15-20 minutes and then soaked in clear water at 25°C to 30°C for 7-8 hours. The soaked seeds are seeded into a seedling sponge block, one seed per hole, a tray is placed under the seedling sponge block, pure water is added with the water level being flushed with the lower surface of the sponge block, water mist is onto the seeds with a sprayer after seeding to maintain surface humidity, and then the seeds are placed in a germination acceleration box for germination acceleration at 22°C to 25°C, with the humidity maintained at 70% to 80%. Water is sprayed onto the seeds every 12 hours.
the yield of leafy vegetables based on a multi-band spectrum in the present invention has the following beneficial effects: the yield of plants is significantly increased by adopting the technical solutions in the present invention, especially a synergistic effect is achieved when the red light, the blue light and the far-red light are used at the same time, such that better growth of plants is promoted.

### DETAILED DESCRIPTION

The implementations of the present invention are described below through specific examples. Those skilled in the art can easily understand the other advantages and effects of the present invention from the content disclosed in this specification. The present invention may also be implemented or applied through other different specific implementations.

**Table 1 Materials and manufacturers**

| Material | Manufacturer | Note (article number) |
|---|---|---|
| Seeds of var. ramosa Hort. | Shanghai Wells Seed Co., Ltd. | 31201600076 |
| Seeds of brassica campestris L. | Xiamen Zhongxia Seed Co., Ltd. | 53232800201600074 |
| Seeds of var. ramosa Hort. | Harbin Just-Team Agriculture Development Co., Ltd. | 6209201700119302 |
| Seedlings of anectochilus roxburhii | Fujian Sanan Sino-Science Photobiotech Co., Ltd | |
| Seeds of viola tricolor L. | Japan Takii | |

Embodiments 1-20 and Comparative Examples 1-2 Cultivation of var. ramosa Hort.
(1) Seeding and germination acceleration: Full seeds of var. ramosa Hort. were selected, soaked in warm water at 50°C for 20 minutes and then soaked in clear water at 30°C for 8 hours. The soaked seeds were seeded into a seedling sponge block, one seed per hole, a tray was placed under the seedling sponge block, pure water was added with the pure water level being flushed with the lower surface of the sponge block, water mist was onto the seeds with a sprayer after seeding to maintain surface humidity, then the seeds were placed in a germination acceleration box for germination acceleration at 25°C, with the humidity maintained at 80%. Water was sprayed onto the seeds every 12 hours.
(2) Growth management: Seedlings of var. ramosa Hort. were planted on hydroponic modules respectively when 4-5 leaves and one heart grew out, and 2/3 of roots were soaked in a nutrient solution. The EC of the nutrient solution was 1.8, the pH was 7.5, the temperature of the nutrient solution was 22°C, and the dissolved oxygen amount was 6 mg/L. Environment temperature conditions were 23°C during daytime and 18°C at night. Light source parameters (including the peak wavelength of light, a photon number ratio, light period and light intensity) were set, and planting was performed for 20 days.

Var. ramosa Hort. is cultivated by using the cultivation method above, the light source parameters in step (2) are changed in each embodiment and comparative example, a fresh weight per plant obtained in each embodiment and comparative example is weighed, and thus an average weight is obtained. Experimental results are shown in Table 2:

**Table 2**

| Number | Spectral composition | | | | | | | Light intensity (µmol/m²·s) | Light period (h/d) | Fresh weight of overground part of plant (g/plant) |
|---|---|---|---|---|---|---|---|---|---|---|
| | Red light 1 | | Blue light | | Red light 2 | | Photon number ratio of light source (red light 1: blue light : red light 2) | | | |
| | Peak wavelength (nm) | Half-width (nm) | Peak wavelength (nm) | Half-width (nm) | Peak wavelength (nm) | Half-width (nm) | | | | |
| Comparative Example 1 (red light) | 660 | 20 | | | | | None | 250 | 9 | 42.81 |
| Embodiment 1 (not claimed) | 680 | 20 | | | | | None | 250 | 9 | 46.09 |
| Embodiment 2 (not claimed) | 680 | 25 | | | | | None | 250 | 9 | 46.05 |
| Embodiment 3 (not claimed) | 685 | 27 | | | | | None | 250 | 9 | 47.23 |
| Embodiment 4 (not claimed) | 690 | 25 | | | | | None | 250 | 9 | 51.24 |
| Embodiment 5 (not claimed) | 693 | 34 | | | | | None | 250 | 9 | 54.94 |
| Embodiment 6 (not claimed) | 695 | 25 | | | | | None | 250 | 9 | 55.89 |
| Embodiment 7 (not claimed) | 695 | 30 | | | | | None | 250 | 9 | 55.71 |
| Comparative Embodiment 2 (blue light) (not claimed) | | | 450 | 20 | | | None | 250 | 9 | 35.48 |
| Embodiment 8 (not claimed) | | | 410 | 20 | | | None | 250 | 9 | 37.82 |
| Embodiment 9 (not claimed) | | | 435 | 20 | | | None | 250 | 9 | 41.02 |
| Embodiment 10 (not claimed) | | | 440 | 20 | | | None | 250 | 9 | 38.87 |
| Embodiment 11 | 680 | 25 | 430 | 20 | | | 3:1 | 250 | 9 | 54.97 |
| Embodiment 12 | 695 | 25 | 440 | 20 | | | 3:1 | 250 | 9 | 64.80 |
| Embodiment 13 | 695 | 25 | 435 | 20 | | | 3:1 | 250 | 9 | 67.22 |
| Embodiment 14 | 695 | 25 | 410 | 20 | | | 3:1 | 250 | 9 | 60.12 |
| Embodiment 15 | 695 | 25 | 480 | 32 | | | 3:1 | 250 | 9 | 59.36 |
| Embodiment 16 (not claimed) | 630 | 20 | 435 | 20 | | | 3:1 | 250 | 9 | 57.24 |
| Embodiment 17 (not claimed) | 660 | 20 | 435 | 20 | | | 3:1 | 250 | 9 | 59.37 |
| Embodiment 18 | 695 | 25 | 435 | 20 | | | 0.1:1 | 250 | 9 | 45.45 |
| Embodiment 19 | 695 | 25 | 435 | 20 | | | 15:1 | 250 | 9 | 59.74 |
| Embodiment 20 | 680 | 25 | 430 | 20 | 735 | 23 | 3:1:1 | 250 | 9 | 66.22 |

The experiments show that compared with a traditional technical solution using a red light at 660 nm or a blue light at 450 nm, yields of plants are increased by 30.5% and 15.6% respectively to the maximum extent by using the solution of the present invention, a significant promoting effect is achieved, and a better promoting effect is achieved when a red light and a blue light are used at the same time or a red light, a blue light and a far-red light are used at the same time.

Embodiments 21-40 and Comparative Embodiments 3-4 Cultivation of brassica campestris L.
(1) Seeding and germination acceleration: Full seeds of brassica campestris L. were selected and seeded into a seedling sponge block, one seed per hole, a tray was placed under the seedling sponge block, pure water was added with the water level being flushed with the lower surface of the sponge block, water mist is sprayed onto the seeds with a sprayer after seeding to maintain surface humidity, then the seeds were placed in a germination acceleration box for germination acceleration at 25°C, with the humidity maintained at 80%. Water was sprayed onto the seeds every 12 hours.
(2) Growth management: Seedlings of brassica campestris L. were planted on hydroponic modules respectively when 4-5 leaves and one heart grew out, and 2/3 of roots were soaked in a nutrient solution. The EC of the nutrient solution was 1.6, the pH was 6.5, the temperature of the nutrient solution was 20°C, and the dissolved oxygen amount was 5.5 mg/L. Environment temperature conditions include 22°C during daytime and 20°C at night. Light source parameters (including a peak wavelength of a light, a photon number ratio, a light period and light intensity) are set, and planting is performed for 15 days.

Brassica campestris L. is cultivated by using the cultivation method above, the light source parameters in step (2) are changed in each embodiment and comparative example, a fresh weight per plant obtained in each embodiment and comparative example is weighed, and thus an average weight is obtained. Experimental results are shown in Table 3:

**Table 3**

| Number | Spectral composition | | | | | | | Light intensity (µmol/m²·s) | Light period (hid) | Fresh weight of overground part of plant (g/plant) |
|---|---|---|---|---|---|---|---|---|---|---|
| | Red light 1 | | Blue light | | Red light 2 | | Photon number ratio of light source (red light 1: blue light : red light 2) | | | |
| | Peak wavelength (nm) | Half-width (nm) | Peak wavelength (nm) | Half-width (nm) | Peak wavelength (nm) | Half-width (nm) | | | | |
| Comparative Example 3 (red light) | 660 | 20 | | | | | None | 250 | 14 | 52.23 |
| Embodiment 21 (not claimed) | 680 | 20 | | | | | None | 250 | 14 | 58.60 |
| Embodiment 22 (not claimed) | 680 | 25 | | | | | None | 250 | 14 | 58.47 |
| Embodiment 23 (not claimed) | 685 | 27 | | | | | None | 250 | 14 | 59.13 |
| Embodiment 24 (not claimed) | 690 | 25 | | | | | None | 250 | 14 | 61.82 |
| Embodiment 25 (not claimed) | 693 | 34 | | | | | None | 250 | 14 | 63.44 |
| Embodiment 26 (not claimed) | 695 | 25 | | | | | None | 250 | 14 | 65.46 |
| Embodiment 27 (not claimed) | 695 | 30 | | | | | None | 250 | 14 | 65.39 |
| Comparative Example 4 (blue light) | | | 450 | 20 | | | None | 250 | 14 | 48.69 |
| Embodiment 28 (not claimed) | | | 410 | 20 | | | None | 250 | 14 | 51.21 |
| Embodiment 29 (not claimed) | | | 435 | 20 | | | None | 250 | 14 | 59.86 |
| Embodiment 30 (not claimed) | | | 440 | 20 | | | None | 250 | 14 | 55.13 |
| Embodiment 31 | 680 | 25 | 430 | 20 | | | 4:1 | 250 | 14 | 75.12 |
| Embodiment 32 | 695 | 25 | 410 | 20 | | | 4:1 | 250 | 14 | 79.24 |
| Embodiment 33 | 695 | 25 | 480 | 32 | | | 4:1 | 250 | 14 | 75.23 |
| Embodiment 34 (not claimed) | 630 | 20 | 435 | 20 | | | 4:1 | 250 | 14 | 72.04 |
| Embodiment 35 (not claimed) | 660 | 20 | 435 | 20 | | | 4:1 | 250 | 14 | 73.68 |
| Embodiment 36 | 695 | 25 | 440 | 20 | | | 4:1 | 250 | 14 | 84.46 |
| Embodiment 37 | 695 | 25 | 435 | 20 | | | 4:1 | 250 | 14 | 90.18 |
| Embodiment 38 | 695 | 25 | 435 | 20 | | | 0.1:1 | 250 | 14 | 68.41 |
| Embodiment 39 | 695 | 25 | 435 | 20 | | | 15:1 | 250 | 14 | 75.16 |
| Embodiment 40 | 680 | 25 | 430 | 20 | 740 | 23 | 4:1:1 | 250 | 14 | 81.12 |

The experiments show that compared with a traditional technical solution using a red light at 660 nm or a blue light at 450 nm, yields of plants are increased by 25.3% and 22.9% respectively to the maximum extent by using the solution of the present invention, a significant promoting effect is achieved, and a better promoting effect is achieved when a red light and a blue light are used at the same time or a red light, a blue light and a far-red light are used at the same time.

Embodiments 41-60 and Comparative Examples 5-6 Cultivation of var. ramosa Hort.
(1) Seeding and germination acceleration: Full seeds of var. ramosa Hort. were selected and seeded into a seedling sponge block, one seed per hole, a tray was placed under the seedling sponge block, pure water was added with the water level being flushed with the lower surface of the sponge block, water mist was sprayed onto the seeds with a sprayer after seeding to maintain surface humidity, then the seeds were placed in a germination acceleration box for germination acceleration at 24°C, with the humidity maintained at 75%. Water was sprayed onto the seeds every 12 hours.
(2) Growth management: Seedlings of var. ramosa Hort. were planted on hydroponic modules respectively when 4-5 leaves and one heart grew out, and 2/3 of roots were soaked in a nutrient solution. The EC of the nutrient solution was 1.6, the pH was 6, the temperature of the nutrient solution was 20°C, and the dissolved oxygen amount was 5 mg/L. Environment temperature conditions were 23°C during daytime and 18°C at night. Light source parameters (including a light type, a wave band, a photon number ratio, a light period and light intensity) are set, and planting is performed for 22 days.

Var. ramosa Hort. is cultivated by using the cultivation method above, the light source parameters in step (2) are changed in each embodiment and comparative example, a fresh weight per plant obtained in each embodiment and comparative example is weighed, and thus an average weight is obtained. Experimental results are shown in Table 4:

**Table 4**

| Number | Spectral composition | | | | | | | Light intensity (µmol/m²·s) | Light period (h/d) | Fresh weight of overground part of plant (g/plant) |
|---|---|---|---|---|---|---|---|---|---|---|
| | Red light 1 | | Blue light | | Red light 2 | | Photon number ratio of light source (red light 1 : blue light: red light 2) | | | |
| | Peak wavelength (nm) | Half-width (nm) | Peak wavelength (nm) | Half-width (nm) | Peak wavelength (nm) | Half-width (nm) | | | | |
| Comparative Example 5 (red light) | 660 | 20 | | | | | None | 250 | 12 | 58.34 |
| Embodiment 41 (not claimed) | 680 | 20 | | | | | None | 250 | 12 | 64.67 |
| Embodiment 42 (not claimed) | 680 | 25 | | | | | None | 250 | 12 | 64.59 |
| Embodiment 43 (not claimed) | 685 | 27 | | | | | None | 250 | 12 | 65.35 |
| Embodiment 44 (not claimed) | 690 | 25 | | | | | None | 250 | 12 | 68.04 |
| Embodiment 45 (not claimed) | 693 | 34 | | | | | None | 250 | 12 | 70.11 |
| Embodiment 46 (not claimed) | 695 | 25 | | | | | None | 250 | 12 | 73.15 |
| Embodiment 47 (not claimed) | 695 | 30 | | | | | None | 250 | 12 | 73.10 |
| Comparative Example 6 (blue light) | | | 450 | 20 | | | None | 250 | 12 | 42.35 |
| Embodiment 48 (not claimed) | | | 410 | 20 | | | None | 250 | 12 | 44.68 |
| Embodiment 49 (not claimed) | | | 435 | 20 | | | None | 250 | 12 | 52.64 |
| Embodiment 50 (not claimed) | | | 440 | 20 | | | None | 250 | 12 | 48.57 |
| Embodiment 51 | 680 | 25 | 430 | 20 | | | 3:1 | 250 | 12 | 75.46 |
| Embodiment 52 | 695 | 25 | 410 | 20 | | | 3:1 | 250 | 12 | 75.14 |
| Embodiment 53 | 695 | 25 | 480 | 32 | | | 3:1 | 250 | 12 | 72.36 |
| Embodiment 54 (not claimed) | 630 | 20 | 435 | 20 | | | 3:1 | 250 | 12 | 68.57 |
| Embodiment 55 (not claimed) | 660 | 20 | 435 | 20 | | | 3:1 | 250 | 12 | 70.16 |
| Embodiment 56 | 695 | 25 | 440 | 20 | | | 3:1 | 250 | 12 | 80.16 |
| Embodiment 57 | 695 | 25 | 435 | 20 | | | 3:1 | 250 | 12 | 82.42 |
| Embodiment 58 | 695 | 25 | 435 | 20 | | | 0.1:1 | 250 | 12 | 55.68 |
| Embodiment 56 | 695 | 25 | 435 | 20 | | | 15:1 | 250 | 12 | 78.12 |
| Embodiment 60 | 680 | 25 | 430 | 20 | 730 | 23 | 3:1:1 | 250 | 12 | 81.46 |

The experiments show that compared with a traditional technical solution using a red light at 660 nm or a blue light at 450 nm, yields of plants are increased by 25.3% and 24.2% respectively to the maximum extent by using the solution of the present invention, a significant promoting effect is achieved, and a better promoting effect is achieved when a red light and a blue light are used at the same time or a red light, a blue light and a far-red light are used at the same time.

Embodiments 61-79 and Comparative Examples 7-8 Cultivation of seedlings of anectochilus roxburhii
(1) Seedlings of anectochilus roxburhii were removed from a tissue culture flask, a substrate was rinsed out with clear water, it should be ensured that stems and roots were intact during rinsing, the seedlings were soaked in a 0.1% potassium permanganate solution for 5 minutes after rinsing for disinfection and sterilization, and the sterilized seedlings were placed in a sterile pot for later use.
(2) The seedlings were respectively planted in a mixed substrate prepared from peat soil, vermiculite and river sand at a ratio of 1:1:1 (the substrate was sterilized at high pressure) after potassium permanganate on surfaces of anectochilus roxburhii leaves evaporated out, a specific nutrient solution was used to replace sterile water for mixing, and the soil moisture was 80%;
(3) The substrate was placed into a planting pot with a size of 25 cm * 25 cm * 25 cm; after the seedlings of anectochilus roxburhii were respectively planted at a specific plant gap of 2 cm, the whole cultivation pot was sealed and moisturized.
(4) The pot was cultivated in an artificial light environment, the light quality of the light environment was X, the light period was 14 h/d, the light intensity was 60±5 µmol/m²·s, the temperature during daytime and at night was 23°C and 18°C respectively, and planting was performed for 120 days.

The seedlings of anectochilus roxburhii are cultivated by using the cultivation method above, and light source parameters in step (4) are changed in each embodiment and comparative example. A fresh weight and a dry weight per plant obtained in each embodiment and comparative example are weighed, and thus the average weight and weight percentage of flavone are obtained. Experimental results are shown in Table 5:

**Table 5**

| Number | Spectral composition | | | | | | | Light intensity (µmol/m²·s) | Light period (hid) | Biological index | | |
|---|---|---|---|---|---|---|---|---|---|---|---|---|
| | Red light 1 | | Blue light | | Red light 2 | | Photon number ratio of light source (red light 1 : blue light : red light 2) | | | Fresh weight per plant (g) | Dry weight per plant (mg) | Flavone (%) |
| | Peak wavelength (nm) | Half-width | Peak wavelength | Half-width | Peak wavelength | Half-width | | | | | | |
| Comparative Example 7 (red light) | 660 | 20 | | | | | | 60 | 14 | 2.51 | 187.24 | 2.71 |
| Embodiment 61 (not claimed) | 680 | 20 | | | | | | 60 | 14 | 2.73 | 207.5 | 2.87 |
| Embodiment 62 (not claimed) | 680 | 25 | | | | | | 60 | 14 | 2.79 | 207.7 | 2.90 |
| Embodiment 63 (not claimed) | 685 | 27 | | | | | | 60 | 14 | 2.81 | 208.10 | 2.93 |
| Embodiment 64 (not claimed) | 690 | 25 | | | | | | 60 | 14 | 2.80 | 208.41 | 3.01 |
| Embodiment 65 (not claimed) | 693 | 34 | | | | | | 60 | 14 | 2.84 | 210.6 | 3.09 |
| Embodiment 66 (not claimed) | 695 | 25 | | | | | | 60 | 14 | 2.89 | 210.92 | 3.26 |
| Embodiment 67 (not claimed) | 695 | 30 | | | | | | 60 | 14 | 2.88 | 210.81 | 3.20 |
| Comparative Example 8 (blue light) | | | 450 | 20 | | | | 60 | 14 | 2.21 | 170.25 | 3.37 |
| Embodiment 68 (not claimed) | | | 410 | 20 | | | | 60 | 14 | 2.41 | 206.92 | 3.43 |
| Embodiment 69 (not claimed) | | | 435 | 20 | | | | 60 | 14 | 2.58 | 213.67 | 3.84 |
| Embodiment 70 (not claimed) | | | 440 | 20 | | | | 60 | 14 | 2.51 | 203.17 | 4.17 |
| Embodiment 71 | 695 | 25 | 435 | 20 | | | 3:1 | 60 | 14 | 3.43 | 258.12 | 3.62 |
| Embodiment 72 | 695 | 25 | 410 | 20 | | | 3:1 | 60 | 14 | 3.14 | 227.03 | 3.42 |
| Embodiment 73 | 695 | 25 | 480 | 32 | | | 3:1 | 60 | 14 | 3.08 | 225.81 | 3.36 |
| Embodiment 74 (not claimed) | 630 | 20 | 435 | 20 | | | 3:1 | 60 | 14 | 2.98 | 217.54 | 3.18 |
| Embodiment 75 (not claimed) | 660 | 20 | 435 | 20 | | | 3:1 | 60 | 14 | 3.05 | 222.65 | 3.22 |
| Embodiment 76 | 680 | 25 | 410 | 20 | | | 3:1 | 60 | 14 | 3.23 | 247.34 | 3.48 |
| Embodiment 77 | 695 | 25 | 435 | 20 | | | 0.1:1 | 60 | 14 | 2.86 | 199.58 | 3.44 |
| Embodiment 78 | 695 | 25 | 435 | 20 | | | 15:1 | 60 | 14 | 3.06 | 219.14 | 3.09 |
| Embodiment 79 | 680 | 25 | 440 | 20 | 735 | 23 | 3:1:1 | 60 | 14 | 3.34 | 240.16 | 3.55 |

The experiment results show that compared with a traditional technical solution using a red light at 660 nm, the fresh weight, the dry weight and the content of flavone are increased by 15.1%, 12.6% and 20.2% respectively to the maximum extent by using the solution of the present invention; and compared with a traditional technical solution using a blue light at 450 nm, the fresh weight, the dry weight and the content of flavone are increased by 16.7%, 25.5% and 23.7% respectively to the maximum extent by using the solution of the present invention, a significant promoting effect is achieved; and a better promoting effect is achieved when a red light and a blue light are used at the same time or a red light, a blue light and a far-red light are used at the same time.

Embodiments 80-86 and Comparative Example 9 Cultivation of viola tricolor L.
(1) Seeding and germination acceleration: Full seeds of viola tricolor L. were selected, soaked in clear water for 4 hours and then seeded into a wet seedling sponge block, one seed per hole, a tray was placed under the seedling sponge block, pure water was added with the water level being flushed with the lower surface of the sponge block, the seeds were placed in a germination acceleration box for germination acceleration at 24°C after seeding, with the humidity maintained at 70%, and water mist was sprayed onto the seeds every 24 hours.
(2) Growth management: Seedlings of viola tricolor L. were planted on hydroponic modules respectively when 4-5 leaves and one heart grew out, and 2/3 of roots were soaked in a nutrient solution. The EC of the nutrient solution was 1.6, the pH was 6.0, the temperature of the nutrient solution was 20°C, and the dissolved oxygen amount was 5 mg/L. Environment temperature conditions were 23°C during daytime and 18°C at night. Light source parameters (including light type, wave bands, a photon number ratio, light period and light intensity) are set, and data are collected once every week after planting is performed for 20 days.
(3) The data which can be collected include the number of flowers, plant height and crown diameter of viola tricolor L. in embodiments and comparative examples. Experimental results are shown in Table 6:

**Table 6**

| Number | Peak wavelength of a red light (nm) | Half-width of a red light (nm) | Light intensity (µmol/m²·s) | Light period (h/d) | Number of flowers (flower) | Plant height (cm) | Crown Diameter (cm) |
|---|---|---|---|---|---|---|---|
| Comparative Example 9 (red light) | 660 | 20 | 200 | 14 | 1109 | 18 | 19 * 20 |
| Embodiment 80 | 695 | 30 | 200 | 14 | 1310 | 21 | 23 * 23 |
| Embodiment 81 | 695 | 25 | 200 | 14 | 1317 | 21 | 23 * 23 |
| Embodiment 82 | 693 | 34 | 200 | 14 | 1299 | 21 | 23 * 23 |
| Embodiment 83 | 690 | 25 | 200 | 14 | 1289 | 21 | 22 * 23 |
| Embodiment 84 | 685 | 27 | 200 | 14 | 1268 | 20 | 22 * 23 |
| Embodiment 85 | 680 | 25 | 200 | 14 | 1249 | 20 | 21 * 23 |
| Embodiment 86 | 680 | 20 | 200 | 14 | 1242 | 20 | 21 * 23 |

The experiment results show that compared with a traditional technical solution using a red light at 660 nm, the number of flowers is increased by 18% to the maximum extent by using the solution of the present invention, and a significant promoting effect is achieved.

The embodiments above are used to illustrate implementations disclosed in the present invention and should not be construed as limitations to the present invention. Although the present invention is described in detail by combining with various specific preferred embodiments of the present invention, it should be understood that the present invention should not be limited to these specific embodiments. In fact, various modifications described above which are easily understood by those skilled in the art and used to obtain the present invention should be included in the scope of the present invention.

## Claims

1. A method for promoting plant growth comprising providing an artificial light source for a growing plant, wherein the light source comprises a red light with a peak wavelength of 680-695 nm and a light wave half-width lower than 35 nm, a blue light with a peak wavelength of 410-480 nm and a far-red light with a peak wavelength of 730-740 nm, and **characterized in that** the red light, blue light and far-red light are provided at the same time, whereby the far-red light has a light wave half-width lower than 35 nm, a photon number ratio of the red light to the blue light is (15-0.1):1 and a photon number ratio of the far-red light to the entire light source is lower than 50%.

2. The method according to claim 1, wherein a cultivation method of the plant comprises use of soil, a nutrient solution or a substrate.

## Patentansprüche

1. Verfahren zum Fördern von Pflanzenwachstum, umfassend Bereitstellen einer künstlichen Lichtquelle für eine wachsende Pflanze, wobei die Lichtquelle ein rotes Licht mit einer Spitzenwellenlänge von 680-695 nm und einer Lichtwellenhalbbreite von unter 35 nm, ein blaues Licht mit einer Spitzenwellenlänge von 410-480 nm und ein fernrotes Licht mit einer Spitzenwellenlänge von 730-740 nm umfasst, und **dadurch gekennzeichnet, dass** das rote Licht, das blaue Licht und das fernrote Licht gleichzeitig bereitgestellt werden, wobei das fernrote Licht eine Lichtwellenhalbbreite von unter 35 nm aufweist, ein Photonenzahlverhältnis des roten Lichts zum blauen Licht (15-0,1):1 beträgt und ein Photonenzahlverhältnis des fernroten Lichts zur gesamten Lichtquelle unter 50 % beträgt.

2. Verfahren nach Anspruch 1, wobei ein Anbauverfahren der Pflanze Verwendung von Erdboden, einer Nährlösung oder eines Substrats umfasst.

## Revendications

1. Un procédé pour stimuler la croissance des plantes comprenant la fourniture d'une source de lumière artificielle pour la croissance des plantes, dans lequel la source de lumière artificielle comprend une lumière rouge à pic de longueur d'onde de 680-695 nm et une demi-largeur d'onde lumineuse inférieure à 35 nm, une lumière bleue à pic de longueur d'onde de 410-480 nm et une lumière rouge lointain à pic de longueur d'onde de 730-740 nm, et **caractérisé en ce que** la lumière rouge, la lumière bleue et la lumière rouge lointain sont fournies au même moment, par lequel la lumière rouge lointain est munie d'une demi-largeur d'onde lumineuse inférieure à 35 nm, un rapport de nombre de photons de lumière rouge à lumière bleue est de (15-0.1) : 1 et un rapport de nombre de photons de lumière rouge lointain à la source de lumière intégrale est inférieur à 50%.

2. Un procédé selon la revendication 1, dans lequel le procédé de culture de plante comprend l'utilisation d'un terreau, d'une solution nutritive ou d'un substrat.
